# EUROPÄISCHE PATENTSCHRIFT

(11) **EP 1 466 813 B1**
(45) Veröffentlichungstag und Bekanntmachung des Hinweises auf die Patenterteilung: **07.06.2006**
(21) Anmeldenummer: 04005222.7
(22) Anmeldetag: 05.03.2004
(51) Int. Cl.: B62D 13/04, B62D 53/00, B62D 6/02

(54) **Dolly-Achse mit lenkbarem Radsatz**
Dolly axle with steerable wheelset
Axe de dolly avec train de roues orientables

(30) Priorität: 10.04.2003 DE 20305794 U
(43) Veröffentlichungstag der Anmeldung: 13.10.2004
(73) Patentinhaber: Fahrzeugwerk Bernard Krone GmbH, 49757 Werlte (DE)
(72) Erfinder: Krone, Bernard, Dr., 48480 Spelle (DE); Evers, Heinz, 49733 Haren (DE)
(74) Vertreter: Pott, Ulrich

(56) Entgegenhaltungen:
- US-A- 2 763 493
- US-A- 3 620 549
- US-A1- 2002 180 178

## Beschreibung

Die vorliegende Erfindung bezieht sich auf eine Dolly-Achse mit einer an einem Rahmen um eine vertikale Drehachse drehbeweglich befestigten Zugdeichsel und einer auf der Oberseite des Rahmens angeordneten Sattelkupplung sowie mindestens einem Radsatz, der von die Drehbewegung der Zugdeichsel übertragenden Übertragungsmitteln lenkbar ist, gemäß dem Oberbegriff des Anspruchs 1.

Eine gattungsgemäße Dolly-Achse ist beispielsweise aus der Offenlegungsschrift US 2002/0180178 A1 bekannt. Hier wird vorgeschlagen, für unterschiedliche Geschwindigkeiten unterschiedlich starke Lenkeinschlagswinkel der Dolly-Achse vorzusehen. Bei der vorgeschlagenen Lösung soll die Dolly-Achse insgesamt mit den Achskörpern und dem Rahmen verschwenkt werden, was sehr hohe Stellkräfte verursacht. Die Lenkkräfte werden mittels eines aufwendigen Getriebes auf die Achskörper übertragen, das zudem wertvollen Bauraum beansprucht.

Eine andere Lösung ist in der Patentschrift US 4,768,802 offenbart. Bei der hier offenbarten Lösung ist eine Zugdeichsel sowohl mit dem Zugfahrzeug als auch mit der Dolly-Achse fest verbunden. Um ein Radieren der Reifen der Dolly-Achse bei Kurvenfahrt auf dem Boden zu vermeiden, ist ein Radsatz der Dolly-Achse lenkbar an dessen Rahmen aufgehängt. Ein Winkelmesser ermittelt die Winkellage der Dolly-Achse zur Längsachse des Zugfahrzeuges und überträgt einen ermittelten Differenzwinkel als Stellgröße auf die Lenkkinematik des lenkbaren Radsatzes. Durch die starre Anbindung der Zugdeichsel ist das gesamte Fahrzeug nicht ausreichend leicht manövrierbar.

Weitere Beispiele aus dem Stand der Technik finden sich in den Schriften US 3,620,549 und US 2,763,493.

Die vorgenannten Beispiele für Dolly-Achsen weisen den Nachteil auf, daß die mit den Dolly-Achsen versehenen Lastzüge sehr große Wendekreise benötigen. Aus der Schrift US 2002/0180178 A1 ist es zwar bekannt, die Dolly-Achsen insgesamt variabel zu verschwenken, das für die Lenkung der Dolly-Achse vorgeschlagene System ist jedoch aufwendig und störanfällig.

Demgemäß ist es die Aufgabe der vorliegenden Erfindung, eine Dolly-Achse mit einer zwischen unterschiedlich starken Lenkeinschlägen verstellbaren Lenkcharakteristik so auszugestalten, daß unterschiedliche Lenkübersetzungen eines mit einer Dolly-Achse ausgestatteten Lastzuges mit einem möglichst geringen Bauaufwand realisierbar sind.

Die Aufgabe wird für eine gattungsgemäße Dolly-Achse gelöst, indem als Übertragungsmittel zumindest ein einen Schaltlenker aufweisenden Zwischenhebel verwendet ist, mit dem die Drehbewegung der Zugdeichsel auf zumindest einen Lenkhebel, der auf den lenkbaren Radsatz wirkt, übertragbar ist, und die Lage des Zwischenhebels durch angetriebene Stellmittel verlagerbar ist.

Bei einer solchen Ausgestaltung wird die sich bei Lenkbewegungen zwangsläufig ergebende Drehbewegung der Zugdeichsel dazu genutzt, über Zwischenhebel einen Lenkeinschlag eines lenkbaren Radsatzes anzutreiben. Anstelle von aufwendigen und defektanfälligen Sensoren, motorischen Antrieben und Getrieben können einfache mechanische Komponenten eingesetzt werden. Durch eine Drehbewegung der Zugdeichsel ist immer ein Lenkwinkel vorgegeben, der von den Zwischenhebeln entsprechend auf den lenkbaren Radsatz übertragen wird. Dadurch kann sowohl die Sensorik zur Ermittlung eines Stellwinkels als auch ein spezieller Antrieb zur Einstellung des gewünschten Lenkwinkels beim lenkbaren Radsatzes entfallen. Bei den Übertragungsmitteln handelt es sich um kostengünstig herstellbare mechanische Komponenten, die zudem zuverlässig sind und kaum besonderer Wartungsarbeiten bedürften. Durch die Übertragung einer Lenkbewegung der Zugdeichsel auf einen lenkbaren Radsatz kann der auf der Dolly-Achse aufliegende Anhänger in einem günstigen, von der Lenkbewegung beeinflußten Radius um eine von der Zugmaschine gefahrene Kurve herum bewegt werden. Durch die Lenkung der Dolly-Achse sind insgesamt kleinere Wenderadien realisierbar.

Um unterschiedliche Lenkübersetzungen zu ermöglichen, ist ein Schaltlenker vorgesehen, der durch ein angetriebenes Stellmittel verlagerbar ist. Durch die Veränderung der Lage des Schaltlenkers wird die Geometrie der Übertragungsmittel verändert. Bei Lenkbewegungen ergeben sich in unterschiedlichen Stellpositionen des Schaltlenkers unterschiedlich starke Lenkbewegungen bei gleichem Einschlagwinkel der Zugdeichsel. In einer Schaltposition des Schaltlenkers können also beispielsweise bei niedrigen Rangiergeschwindigkeiten von der Zugdeichsel geringere Lenkbewegungen auf den lenkbaren Radsatz übertragen werden, während in einer anderen Schaltposition des Schaltlenkers bei beispielsweise höheren Geschwindigkeiten die von der Zugdeichsel übertragenen Stellwege bei gleichem Einschlagwinkel der Zugdeichsel größer sind. In diesem Ausführungsbeispiel wird der von der Zugdeichsel ausgehende Lenkimpuls also bei niedrigeren Geschwindigkeiten untersetzt, während er bei höheren Geschwindigkeiten übersetzt wird.

Die erfindungsgemäße Ausgestaltung ermöglicht es also, mit kostengünstigen Stellelementen geschwindigkeitsabhängig unterschiedlich starke Lenkimpulse auf einen lenkbaren Radsatz zu übertragen. Die Kombination von Zwischenhebeln als Übertragungsmittel von Lenkimpulsen, die von der Deichsel übertragen werden, mit angetriebenen Stellmittein, durch die die Lage des Zwischenhebels verlagerbar ist, ermöglicht eine funktionssichere und kostengünstige Lösung, eine Dolly-Achse mit einer verstellbaren Lenkcharakteristik zu versehen.

Nach einer Ausgestaltung der Erfindung sind die angetriebenen Stellmittel nur in einer neutralen Lenkposition betätigbar. Die neutrale Lenkposition entspricht im Normalfall der Geradeausfahrt. Durch die Verstellung bei Geradeausfahrt werden unerwünschte Auswirkungen auf das Lenkverhalten der Dolly-Achse vermieden.

Weitere vorteilhafte Ausgestaltungen und Verbesserungen der Erfindung ergeben sich aus den Merkmalen der Unteransprüche, der gegenständlichen Beschreibung und den Zeichnungen.

Die Erfindung wird nun anhand eines Ausführungsbeispieles näher beschrieben. Es zeigen:
- Fig. 1:: eine Seitenansicht einer Dolly-Achse,
- Fig. 2:: eine Sicht von oben auf eine Dolly-Achse,
- Fig. 3:: einen vergrößerten Ausschnitt aus Fig. 2,
- Fig. 4:: eine Sicht von oben auf eine Dolly-Achse mit eingeschlagener Zugdeichsel, und
- Fig. 5:: eine Ansicht von oben auf eine Dolly-Achse mit verlagerten Schaltlenkern.

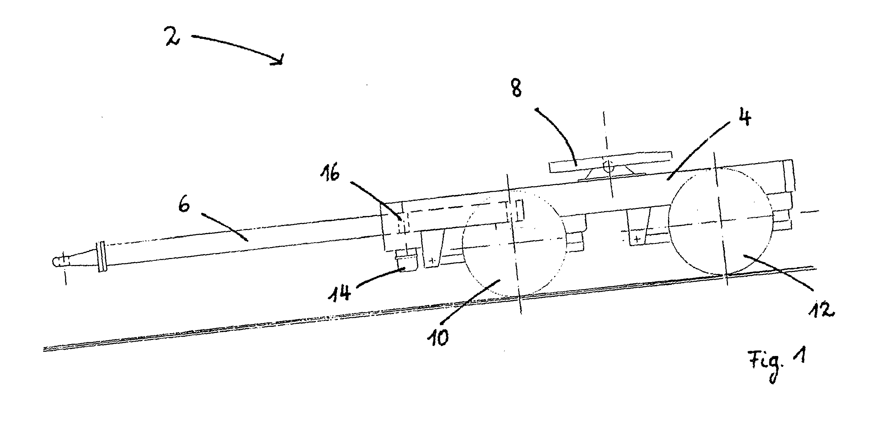

In Fig. 1 ist eine Seitenansicht einer Dolly-Achse 2 zu sehen. Die Dolly-Achse 2 weist einen Rahmen 4, eine Zugdeichsel 6, eine Sattelkupplung 8, einen lenkbaren Radsatz 10 und einen nicht lenkbaren Radsatz 12 auf. Für die Erfindung ist vor allem der lenkbare Radsatz von Bedeutung, der nicht lenkbare Radsatz ist fakultativ. Der lenkbare Radsatz kann über eine Einzelradaufhängung verfügen oder an einer Starrachse befestigt sein. Die Zugdeichsel 6 ist mit ihrem vorderen Ende an eine Anhängekupplung eines Zugfahrzeuges anhängbar. Die Form der Zugdeichsel ist nicht auf die im Ausführungsbeispiel gezeigte Ausführung beschränkt, sondern kann auch andere Formgestaltungen aufweisen, wie beispielsweise eine Schwanenhals-Deichsel. Ein Sattelaufliege-Anhänger kann mit der Sattelkupplung 8 fest verbunden werden. Auf diese Weise ist es möglich, ein Gespann zu realisieren, dessen Gesamtlänge bis zu 25 Metern beträgt. Neben dem Laderaum des Sattelaufliege-Anhängers kann der entsprechende Lastzug über zusätzlichen Laderaum verfügen, der auf dem Zugfahrzeug angeordnet ist.

Wenn ein Mitlenken des lenkbaren Radsatzes 10 unerwünscht ist, kann mittels eines Sperrbolzens 14 die Zugdeichsel 6 arretiert werden. Im Ausführungsbeispiel geschieht dies, indem der Sperrbolzen 14 in eine in der Zugdeichsel 6 befindliche Verriegelungsöffnung 16 geschoben wird. Auf diese Weise ist die Zugdeichsel 6 mittels des Sperrbolzens 14 fest mit dem Rahmen 4 verbunden. Andere technische Lösungen zur Arretierung der Zugdeichsel 6 sind möglich. Im Normalfall ist die Zugdeichsel 6 jedoch um die Drehachse 18 schwenkbar mit dem Rahmen 4 verbunden. Die Drehachse 18 liegt in einer vertikalen Linie mit der Drehachse des lenkbaren Radsatzes 10. Bei dieser Anordnung werden nur geringe Lenkkräfte benötigt, um den Lenkeinschlag des lenkbaren Radsatzes 10 zu verändern.

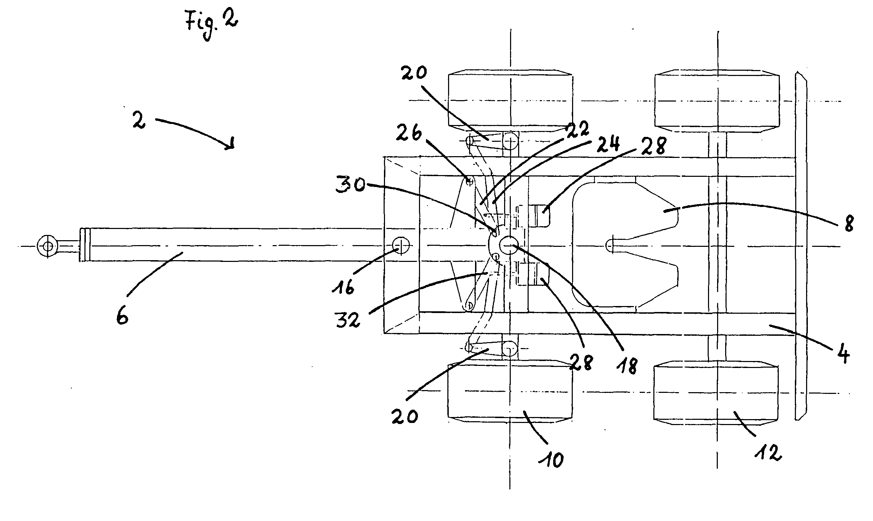

In Fig. 2 ist eine Dolly-Achse 2 aus einer Ansicht von oben zu sehen. Gut erkennbar ist die um die Drehachse 18 schwenkbare Zugdeichsel 6. Die Sattelkupplung 8 ist etwa mittig zwischen dem lenkbaren Radsatz 10 und dem nicht lenkbaren Radsatz 12 angeordnet. Im Ausführungsbeispiel ist die Dolly-Achse 2 also als Zwei-Achs-Ausführung gezeigt. Die erfindungsgemäße Lösung kann aber auch bei Ein-Achs- oder mehr als zwei Achsen entsprechend eingesetzt werden.

In Fig. 2 sind die Lenkhebel 20 erkennbar. Die Anlenkpunkte an den Lenkhebeln 20, an denen die Übertragungsmittel angreifen, sind beabstandet zur Drehachse des Lenkgelenks angeordnet, um einen Hebelweg für die Verstellung des Lenkeinschlages nutzen zu können. Die Übertragungsmittel bestehen im Ausführungsbeispiel aus dem Schaltlenker 22 und der Spurstange 24, die im Ausführungsbeispiel geteilt ist und auf jeder Radseite aus einer einzelnen separaten Stange besteht. Der Schaltlenker 22 ist an einem Ende in einer ortsfest zur Zugdeichsel 6 angeordneten Schwenkachse 26 und am anderen Ende in einer mit der Spurstange 24 gemeinsamen Drehachse 30 drehbar gelagert. Der Anlenkpunkt 32 des Stellmittels 28 liegt zwischen der Drehachse 30 und der Schwenkachse 26.

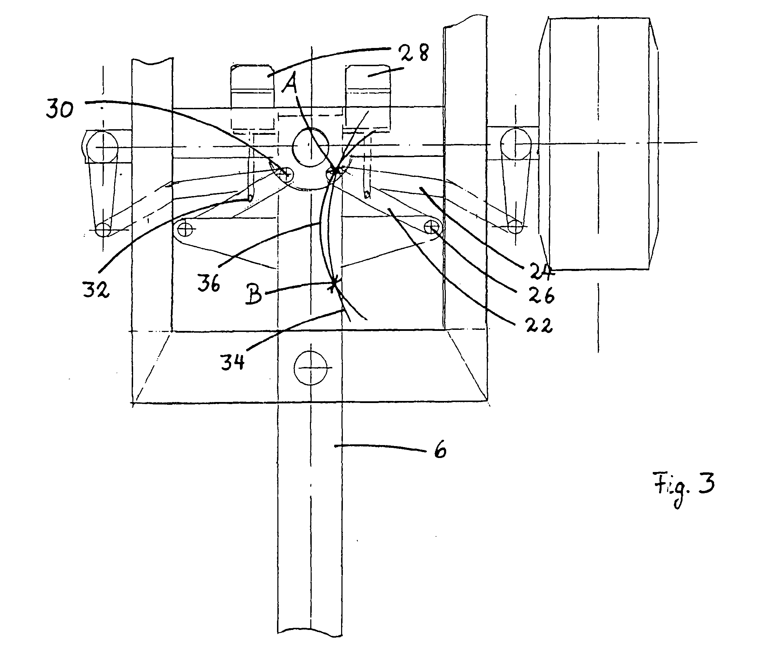

In Fig. 3 sind die Kreisbögen dargestellt, an denen sich der Schaltlenker 22 bei einer Drehung um die Schwenkachse 26 als Drehpunkt und die Spurstange 24 bei einer Verschwenkung um den Anlenkpunkt des Lenkhebels 20 entlang bewegt. Die Bewegungsbahn 34 des Spurstange 24 verläuft dabei sehr ähnlich wie die Bewegungsbahn 36 des Schaltlenkers 22, wobei sich aber aufgrund der unterschiedlichen Radiuslänge geringfügige Unterschiede im Bogenverlauf ergeben. Wenn die Spurstange 24 und der Schaltlenker 22 einen gleichen Schwenkpunkt und eine gleiche Radiuslänge hätten, wären beide Bewegungsbahnen identisch. Wegen der unterschiedlichen Radiuslänge schneiden sich im Ausführungsbeispiel die beiden Bewegungsbahnen jedoch nur in den Punkten A und B. Aus der Lenkkinematik ergibt sich, daß in den Schnittpunkten A, B der Lenkwinkel der Räder des lenkbaren Radsatzes 10 bei Geradeausstellung der Zugdeichsel 6 den Wert 0 einnimmt. Wird also der Schaltlenker 22 mit einem der Drehachse 30 entsprechenden Anlenkpunkt entweder in dem Schnittpunkt A oder in dem Schnittpunkt B gehalten, so ergeben sich bei Geradeausfahrt keine Lenkwinkel-Abweichungen der lenkbaren Räder von der Geradeausstellung der Zugdeichsel 6, der lenkbare Radsatz 10 ist sauber auf Geradeausfahrt eingestellt.

Bei einer Verlagerungsbewegung von einem Schnittpunkt zum anderen Schnittpunkt ergeben sich durch die im Ausführungsbeispiel nicht deckungsgleichen Bewegungsbahnen 34, 36 für den Verlagerungszeitraum kleine Lenkeinschlagswinkel am lenkbaren Radsatz 10 trotz Geradeausstellung der Zugdeichsel 6, die jedoch wegen der sehr ähnlichen Bewegungsbahnen 34, 36 so gering sind, daß sie für den Verlagerungszeitraum als Reifenschlupf ausgleichbar sind. Da die Verstellung des Schaltlenkers 22 von einem Schnittpunkt zum anderen Schnittpunkt nur etwa eine halbe bis eine Sekunde dauern muß, ist der Schlupfzustand sehr kurz, der zusätzliche Reifenverschleiß, der durch die Umschaltung der räumlichen Lage des Schaltlenkers 22 auftritt, ist kaum meßbar. Um die verstellungsbedingten Schlupfverluste und den entsprechenden Reifenabrieb möglichst gering zu halten, sollten die Bewegungsbahnen 34, 36 so gewählt werden, daß sie zwischen den Schnittpunkten A, B so weit wie möglich identisch verlaufen. Eine solche Ausgestaltung ist in Fig. 2 dargestellt. Ein möglichst identischer Verlauf der Bewegungsbahnen 34, 36 wird erzielt, je näher die Anlenkpunkte des Schaltlenkers 22 und der Spurstange 24 zueinander liegen.

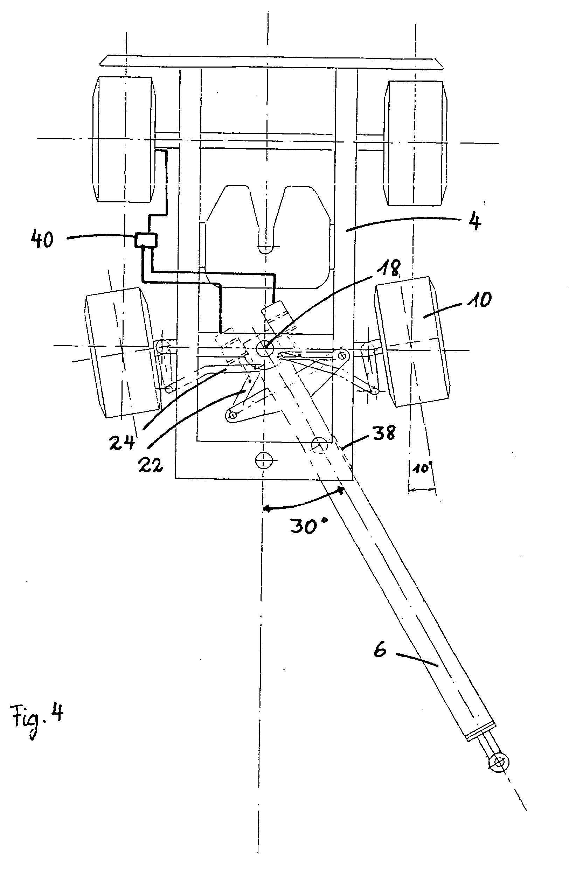

In Fig. 4 ist eine Dolly-Achse 2 gezeigt, bei der die Zugdeichsel 6 in einem Winkel von etwa 30° zur Längsmittelachse des Rahmens 4 ausgeschwenkt ist. Über die Schaltlenker 22 und die Spurstange 24 wird die Schwenkbewegung der Zugdeichsel 6 in einen Anlenkwinkel der gelenkten Räder 10 übertragen, der etwa 10° beträgt. Am Rahmen 4 ist ein Anschlag 38 angeordnet, durch den die Ausschwenkbewegung der Zugdeichsel 6 zur Seite hin begrenzt wird. Dadurch wird auch verhindert, daß die Reifen des lenkbaren Radsatzes 10 beispielsweise am Rahmen entlang schleifen. Die gezeigte Länge und räumliche Anordnung des Schaltlenkers 22 und der Spurstange 24 ist nur als exemplarisch zu verstehen, als Übertragungsmittel können auch mehr als zwei Elemente eingesetzt werden, und diese können über mehrere schwenkbewegliche Lenker mit entsprechend angeordneten Drehpunkten auch entlang einer Bewegungsbahn geführt werden, die nicht kreisbogenförmig rund verläuft. Auf diese Weise ist es auch möglich, mehr als zwei Schnittpunkte zu erhalten, in denen ein Betrieb ohne schlupfbedingten zusätzlichen Reifenverschleiß möglich ist, oder eine Bewegungsbahn darzustellen, die nicht kreisbogenförmig verläuft. Auch ist vorstellbar, bei einer entsprechenden Ausgestaltung der Übertragungsmittel und/oder einem zusätzlichen Stellmittel eine Lenkposition des Schaltlenkers 22 herzustellen, in der der lenkbare Radsatz 10 eine Lenkstellung einnimmt, der der Lenkrichtung des Zugfahrzeuges entgegengerichtet ist. Eine solche Gestaltung kann sich insbesondere beim Vorwärts- und Rückwärtsmanövrieren auf sehr engem Bewegungsraums als vorteilhaft erweisen.

Die Stellmittel 28 sind von einer Steuerung 40 steuerbar. Die Steuerung 40 verfügt über eine softwaregesteuerte Elektronik, die vorgegebene Betriebsparameter als Sensordaten abfragt und diese zu einem Stellsignal für die Betätigung der Stellmittel 28 umrechnet. So kann die Steuerung 40 beispielsweise aus dem Bremsregelkreis eines ABS-Systems Geschwindigkeitsdaten abfragen, um abhängig von diesen Daten zu entscheiden, in welchen Betriebspunkt die Übertragungsmittel zu fahren sind. Die Steuerung 40 kann auch an ein Bus-Fahrzeugnetz angeschlossen sein und mit anderen angeschlossenen Komponenten kommunizieren. Die Steuerung 40 kann mittels einer Hysterese-Schaltung so ausgelegt sein, daß sie die Verlagerung des Schaltlenkers 22 vom Punkt A zum Punkt B bei einer anderen Geschwindigkeit auslöst als die Rückverlagerung von B nach A. Durch eine solche Auslegung wird ein heftiges Hin- und Herschalten der Stellmittel 28 vermieden. Anstelle von zwei Stellmitteln 28 kann auch ein einziges Stellmittel 28 verwendet werden oder es sind weitere Stellmittel 28 vorgesehen, um eine gewünschte Bewegungsbahn einstellen zu können.

Die Stellmittel 28 können auf beliebige Weise antreibbar sein. Im Ausführungsbeispiel bestehen diese aus Pneumatik-Zylindern. Der Betriebsdruck zur Betätigung der Pneumatik-Zylinder kann aus dem Bremssystem entnommen werden. Anstelle pneumatischer Hubzylinder können jedoch auch hydraulische Hubzylinder eingesetzt werden, oder die Drehbewegung des Schaltlenkers 22 wird elektromotorisch bewirkt.

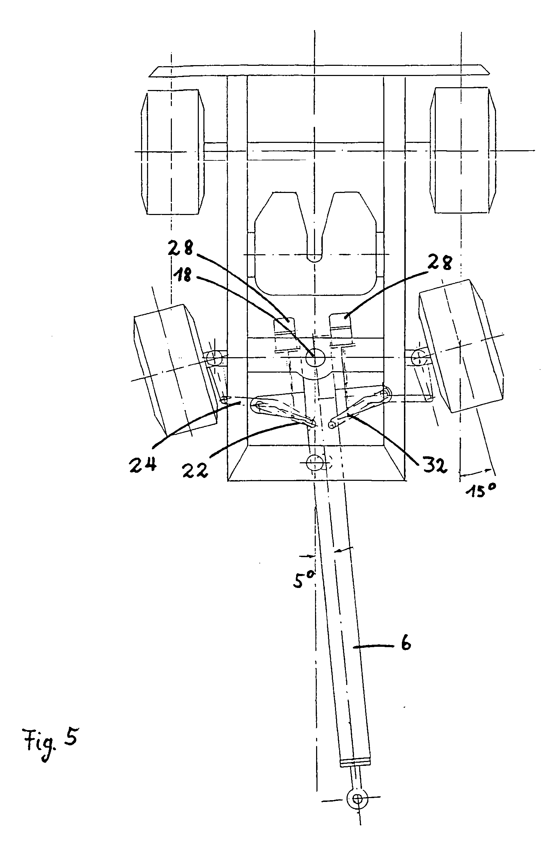

In Fig. 5 ist ein Betriebszustand der Dolly-Achse 2 gezeigt, in der die Schaltlenker 22 von den Stellmitteln 28 in eine gegenüber der in den anderen Figuren gezeigten Ausführungsform andere Schwenklage verstellt sind. In dem Ausführungsbeispiel genügt schon ein Schwenkwinkel der Zugdeichsel 6 von etwa 5° zur Längsmittelachse des Rahmens 4 der Dolly-Achse 2, um einen Anstellwinkel des lenkbaren Radsatzes 10 von etwa 15° zu bewirken. Gegenüber der in Fig. 4 gezeigten Version kann also durch die Verlagerung des Schaltlenkers 22 bei einer Auslenkung der Zugdeichsel 6 von nur 5° ein Lenkwinkel des lenkbaren Radsatzes 10 von 15° erzielt werden. Ein solches Übersetzungsverhältnis ist im Vergleich zum in Figur 4 dargestellten Übersetzungsverhältnis eher für höhere Geschwindigkeiten geeignet, da der auf der Dolly-Achse 2 aufliegende Auflieger bei höheren Fahrgeschwindigkeiten und einer Untersetzung des Lenkimpulses leicht ins Schlingern geraten und durch zu geringe Lenkausschläge nicht wieder eingefangen werden kann. Die Übersetzung des Lenkimpulses wirkt so stabilisierend auf das Fahrverhalten. Um ein Schlingern des Anhängers zu vermeiden, kann also bei Geschwindigkeiten oberhalb von 30 km/h der Schaltlenker 22 in einen anderen Schnittpunkt verlagert werden, um ein ruhigeres Fahrverhalten des Aufliegers aufgrund der größeren Lenkeinschläge zu erzielen. In anderen Ausführungen mit anderen Geometrien, zusätzlichen Lenkungsdämpfern und dergleichen kann jedoch auch eine Untersetzung von Vorteil sein. Der Fachmann ist ohne weiteres dazu in der Lage, die hier vorgeschlagene Erfindung seinen praktischen Bedürfnissen anzupassen.

## Patentansprüche

1. Dolly-Achse (2) mit einer an einem Rahmen (4) um eine vertikale Drehachse (18) drehbeweglich befestigten Zugdeichsel (6) und einer auf der Oberseite des Rahmens (4) angeordneten Sattelkupplung (8) sowie mindestens einem Radsatz (10), der von die Drehbewegung der Zugdeichsel (6) übertragenden Übertragungsmitteln lenkbar ist, **dadurch gekennzeichnet, daß** als Übertragungsmittel zumindest ein einen Schaltlenker (22) aufweisenden Zwischenhebel verwendet ist, mit dem die Drehbewegung der Zugdeichsel (6) auf zumindest einen Lenkhebel (20), der auf den lenkbaren Radsatz (10) wirkt, übertragbar ist, und die Lage des Zwischenhebels durch angetriebene Stellmittel (28) verlagerbar ist.

2. Dolly-Achse (2) nach Anspruch 1, **dadurch gekennzeichnet, daß** der Zwischenhebel neben dem Schaltlenker (22) zusätzlich eine damit durch eine gemeinsame Drehachse (30) verbundene Spurstange (24) aufweist.

3. Dolly-Achse (2) nach Anspruch 1 oder 2, **dadurch gekennzeichnet, daß** die angetriebenen Stellmittel (28) nur in einer neutralen Lenkposition betätigbar sind.

4. Dolly-Achse nach einem der vorhergehenden Ansprüche, **dadurch gekennzeichnet, daß** ein Schaltlenker (22) an einem Ende in einer ortsfest zur Zugdeichsel (6) angeordneten Schwenkachse (26) und am anderen Ende in einer mit der Spurstange (24) gemeinsamen Drehachse (30) drehbar gelagert ist, und der Anlenkpunkt (32) des Stellmittels (28) zwischen der Drehachse (30) und der Schwenkachse (26) liegt.

5. Dolly-Achse (2) nach einem der Ansprüche 2 bis 4, **dadurch gekennzeichnet, daß** die Schaltlenker (22) und die Spurstangen (24) in einer neutralen Lenkposition verstellbar sind, und die Bewegungsbahnen (34, 36) der jeweiligen Verbindungsachse zur gemeinsamen Drehachse (30) des Schaltlenkers (22) und der Spurstange (24) bei freier Verschwenkung des einzelnen Schaltlenkers (22) und der einzelnen Spurstange (24) zumindest zwei gemeinsame Schnittpunkte (A, B) aufweisen.

6. Dolly-Achse (2) nach Anspruch 5, **dadurch gekennzeichnet, daß** die Schnittpunkte (A, B) jeweils festen Betriebspunkten entsprechen.

7. Dolly-Achse (2) nach einem der vorhergehenden Ansprüche, **dadurch gekennzeichnet, daß** die ortsfest zur Zugdeichsel (6) angeordnete Schwenkachse (26) des Schaltlenkers (22) in Längs- und Querrichtung des Rahmens (4) beabstandet zum Drehpunkt (18) der Zugdeichsel (6) ist.

8. Dolly-Achse (2) nach einem der vorhergehenden Ansprüche, **dadurch gekennzeichnet, daß** am Rahmen (4) Anschläge (38) angebracht sind, die die Verdrehung der Zugdeichsel (6) begrenzen.

9. Dolly-Achse (2) nach einem der vorhergehenden Ansprüche, **dadurch gekennzeichnet, daß** die Zugdeichsel (6) verriegelbar ist.

10. Dolly-Achse (2) nach einem der vorhergehenden Ansprüche, **dadurch gekennzeichnet, daß** die Zugdeichsel (6) nicht um eine horizontale Achse schwenkbar ist.

11. Dolly-Achse (2) nach einem der vorhergehenden Ansprüche, **dadurch gekennzeichnet, daß** die Stellmittel (28) von einer Steuerung (40) betätigbar sind, und die Steuerung (40) die Stellmittel (28) in Abhängigkeit von vorgegebenen Betriebsparametern betätigt.

12. Dolly-Achse (2) nach einem der vorhergehenden Ansprüche, **dadurch gekennzeichnet, daß** der resultierende Lenkwinkel der Räder des gelenkten Radsatzes (10) bei einem gegebenen Drehwinkel der Zugdeichsel (6) bei niedrigen Geschwindigkeiten kleiner ist als bei höheren Geschwindigkeiten.

## Claims

1. Dolly axle (2) having a drawbar (6) which is fixed to a frame (4) to be movable in rotation about a vertical axis of rotation (18), a fifth-wheel coupling (8) arranged on the upper side of the frame (4), and at least one wheelset (10) which can be steered by transmission means which transmit the rotary movement of the drawbar (6), **characterised in that** what is used as the transmission means is at least one intermediate lever having a shiftable link arm (22), by which intermediate lever the rotary movement of the drawbar (6) can be transmitted to at least one steering arm (20) which acts on the steerable wheelset, and the position of the intermediate lever is able to be changed by driven positioning means (28).

2. Dolly axle (2) according to claim 1, **characterised in that** the intermediate lever has in addition, as well as the shiftable link arm (22), a track rod (24) which is connected to the latter by a shared shaft for rotation (30).

3. Dolly axle (2) according to claim 1 or 2, **characterised in that** the driven positioning means (28) can be actuated only in a neutral steered position.

4. Dolly axle (2) according to one of the foregoing claims, **characterised in that** a shiftable link arm (22) is mounted to be rotatable, at one end on a pivot shaft (26) which is arranged in a fixed position relative to the drawbar (6) and at the other end on a shaft for rotation (30) which is shared with the track rod (24), and the point (32) to which the positioning means (28) is articulated is situated between the shaft for rotation (30) and the pivot shaft (26).

5. Dolly axle (2) according to one of claims 2 to 4, **characterised in that** the shiftable link arm (22) and the track rods (24) are adjustable in a neutral steered position, and the paths (34, 36) along which the axes of the respective connections to the shared shaft for rotation (30) of the switching link arm (22) and the track rod (24) would move if the individual switching link arm (22) and the individual track rod (24) were to pivot freely have at least two common points of intersection (A, B).

6. Dolly axle (2) according to claim 5, **characterised in that** the points of intersection (A, B) each correspond to fixed points in operation.

7. Dolly axle (2) according to one of the foregoing claims, **characterised in that** the pivot shaft (26) of the shiftable link arm (22), which pivot shaft (26) is arranged in a fixed position relative to the drawbar (6), is spaced away from the pivot point (18) of the drawbar (6) in the longitudinal and transverse directions of the frame (4).

8. Dolly axle (2) according to one of the foregoing claims, **characterised in that** stops (38) which limit the rotation of the drawbar (6) are arranged on the frame (4).

9. Dolly axle (2) according to one of the foregoing claims, **characterised in that** the drawbar (6) is lockable.

10. Dolly axle (2) according to one of the foregoing claims, **characterised in that** the drawbar (6) is not pivotable about a horizontal axis.

11. Dolly axle (2) according to one of the foregoing claims, **characterised in that** the positioning means (28) are able to be actuated by a control means (40), and the control means (40) actuates the positioning means (28) as a function of preset operating parameters.

12. Dolly axle (2) according to one of the foregoing claims, **characterised in that**, for a given angle of rotation of the drawbar (6), the resultant steered angle of the wheels of the steered wheelset (10) is smaller at low speeds than at higher speeds.

## Revendications

1. Axe de chariot (2) avec un timon de traction (6) fixé à un châssis (4) de façon rotative autour d'un axe de rotation vertical (18) et un couplage de remorque (8) disposé sur le côté supérieur du châssis (4), ainsi qu'avec au moins un essieu directeur (10) qui peut pivoter à l'aide de moyens de transmission transmettant le mouvement de rotation du timon de traction (6), **caractérisé en ce que** l'on utilise comme moyens de transmission au moins un bras intermédiaire comportant une traverse de manoeuvre (22), avec lequel le mouvement de rotation du timon de traction (6) peut être transmis à au moins un bras de direction (20), qui agit sur l'essieu directeur (10), et la position du bras intermédiaire peut être déplacée par des moyens de réglage motorisés (28).

2. Axe de chariot (2) selon la revendication 1, **caractérisé en ce que** le bras intermédiaire comprend en outre, en plus de la traverse de manoeuvre (22), une barre d'accouplement (24) assemblée à celle-ci par un axe de rotation commun (30).

3. Axe de chariot (2) selon la revendication 1 ou 2, **caractérisé en ce que** les moyens de réglage motorisés (28) ne sont actionnables que dans une position de braquage neutre.

4. Axe de chariot selon l'une quelconque des revendications précédentes, **caractérisé en ce qu'**une traverse de manoeuvre (22) est montée de façon rotative à une extrémité dans un axe de pivotement (26) disposé en un point fixe par rapport au timon de traction (6) et à l'autre extrémité dans un axe de rotation commun (30) avec la barre d'accouplement (24), et le point d'articulation (32) du moyen de réglage (28) est situé entre l'axe de rotation (30) et l'axe de pivotement (26).

5. Axe de chariot (2) selon l'une quelconque des revendications 2 à 4, **caractérisé en ce que** les traverses de manoeuvre (22) et les barres d'accouplement (24) sont réglables dans une position de braquage neutre, et les trajectoires (34, 36) de l'axe d'assemblage respectif de la traverse de manoeuvre (22) et de la barre d'accouplement (24) à l'axe de rotation commun (30) présentent au moins deux points d'intersection (A, B) communs lors d'un pivotement libre de la traverse de manoeuvre individuelle (22) et de la barre d'accouplement individuelle (24).

6. Axe de chariot (2) selon la revendication 5, **caractérisé en ce que** les points d'intersection (A, B) correspondent chaque fois à des points de fonctionnement fixes.

7. Axe de chariot (2) selon l'une quelconque des revendications précédentes, **caractérisé en ce que** l'axe de pivotement (26) de la traverse de manoeuvre (22), disposé en un point fixe par rapport au timon de traction (6), est espacé dans la direction longitudinale et dans la direction transversale du châssis (4) par rapport au point de rotation (18) du timon de traction (6).

8. Axe de chariot (2) selon l'une quelconque des revendications précédentes, **caractérisé en ce qu'**il est prévu sur le châssis (4) des butées (38), qui limitent la rotation du timon de traction (6).

9. Axe de chariot (2) selon l'une quelconque des revendications précédentes, **caractérisé en ce que** le timon de traction (6) peut être verrouillé.

10. Axe de chariot (2) selon l'une quelconque des revendications précédentes, **caractérisé en ce que** le timon de traction (6) ne peut pas pivoter autour d'un axe horizontal.

11. Axe de chariot (2) selon l'une quelconque des revendications précédentes, **caractérisé en ce que** les moyens de réglage (28) peuvent être actionnés par une commande (40), et la commande (40) actionne les moyens de réglage (28) en fonction de paramètres de fonctionnement prédéterminés.

12. Axe de chariot (2) selon l'une quelconque des revendications précédentes, **caractérisé en ce que** l'angle de braquage des roues de l'essieu directeur (10) obtenu pour un angle de rotation donné du timon de traction (6) est plus petit à de faibles vitesses qu'à des vitesses plus élevées.
